# EUROPEAN PATENT APPLICATION

(11) **EP 1 704 914 A1**
(43) Date of publication of application: **27.09.2006**
(21) Application number: 06251502.8
(22) Date of filing: 21.03.2006
(51) Int. Cl.: B01J 7/02, A23B 7/152, C01B 3/08, C01B 13/02

(54) **Gas generating device**

(30) Priority: 23.03.2005 JP 2005083894
(71) Applicant: ROHM AND HAAS COMPANY, Philadelphia, Pennsylvania 19106-2399 (US)
(72) Inventor: Makihara, Daizaburo, Ichikawa-ski, Chiba-ken (JP); Mitsui, Banjo, Yokohama-shi, Kanagawa-ken (JP)
(74) Representative: Kent, Venetia Katherine

(57) **Abstract**

It is an object of the present invention to provide a gas generating device that can initiate the reaction of a liquid-reactive chemical at a specified time, and stop the supply of the reaction liquid at a specified time, so that generation of a gas by the liquid-reactive chemical can be promoted after workers have finished loading fruits, vegetables, or other produce into a treatment chamber, and a personnel-free sealed state has been formed in the treatment chamber.

A gas generating device having an upper tubular part that forms a receiving chamber 3 for a reaction liquid 2 and a lower tubular part that forms a receiving chamber 5 for a liquid-reactive chemical 4, wherein a reaction liquid supply port that supplies the reaction liquid 2 inside the receiving chamber 3 to the receiving chamber 5 is provided between the receiving chambers 3 and 5; and a shut-off valve 7 is provided which opens the supply port 6 and allows the supply of the reaction liquid 2, and closes the supply port 6 and cuts off the supply of the reaction liquid 2. The device further has a gas discharge opening 9 that discharges a gas G generated inside the receiving chamber 5 to the outside from this receiving chamber 5, and further has timer means for setting the supply time of the reaction liquid via the opening and closing of the shut-off valve 7.

## Description

### FIELD OF INVENTION

The present invention relates to a gas generating device used to generate a gas by mixing a liquid-reactive chemical and a reaction liquid, e.g., to generate a freshness-preserving gas for fruits, vegetables, and other produce.

### BACKGROUND INFORMATION

Citation 1 discloses a cyclopropene compound (cyclopropene/cyclodextrin composite) that is effective as a freshness-preserving agent for produce, and further discloses a device for generating a freshness-preserving gas (cyclopropene gas) by reacting this cyclopropene compound with water.

The above-mentioned cyclopropene gas generating device has a structure in which a reaction liquid (water) and cyclopropene compound are introduced together into the same tube via a top opening of an upright tubular body; air or nitrogen, and carbon dioxide, are introduced into a suspension of the cyclopropene compound via a nozzle situated in the bottom part of the upright tubular body; cyclopropene gas (a freshness-preserving gas) is actively generated while this suspension is agitated; and this gas is discharged to the outside (into a sealed treatment chamber in which the produce is stored) via the top opening.
Citation 1 - Japanese Unexamined Patent Application No. 2004-26821

### STATEMENT OF INVENTION

However, in the gas generating device, the reaction is initiated and the gas generated at the same time that the cyclopropene compound is introduced into the water inside the tubular body. Accordingly, the resulting chemical loss remains an unavoidable problem.

Ordinarily, when subjecting produce to gas treatment, it is desirable to adopt a method in which the gas generation is performed after workers have finished conveying the produce into the treatment chamber, and a personnel-free sealed state has been formed in the treatment chamber.

However, with the gas generating device, the reaction is initiated at the same time that the workers introduce the chemical into the treatment chamber. Accordingly, it is difficult to adopt a desirable configuration for use in which the generation of gas is performed after the personnel-free sealed state has been formed.

The present invention provides a gas generating device that can initiate the reaction of the liquid-reactive chemical at a specified time, and stop the supply of the reaction liquid at a specified time.

In other words, the present invention provides a gas generating device that can adopt a desired configuration of use in which gas generation by the liquid-reactive chemical is performed after workers have finished loading fruits, vegetables, or other produce into the treatment chamber, and a personnel-free sealed state has been formed.

In addition, the present invention provides a gas generating device that can supply the necessary and appropriate amount of liquid to the reaction inside the liquid-reactive chemical so that no chemical loss occurs.

### DETAILED DESCRIPTION

In essence, the gas generating device of the present invention has a structure in which a liquid-receiving chamber receiving the reaction liquid is formed in an upper tubular part of a tubular body, a chemical-receiving chamber receiving a liquid-reactive chemical that reacts with the liquid to generate a gas is formed in a lower tubular part of the tubular body, and the reaction liquid and liquid-reactive chemical are separately accommodated in the upper and lower chambers.

A reaction liquid supply port that supplies the reaction liquid in the liquid-receiving chamber to the chemical-receiving chamber is provided between the liquid-receiving chamber and chemical-receiving chamber, and a shut-off valve is provided which opens the reaction liquid supply port and allows the supply of the reaction liquid, and closes the reaction liquid supply port and cuts off the supply of the reaction liquid.

Furthermore, timer means is provided for setting the reaction liquid supply time (reaction initiation time) via the opening and closing of the shut-off valve, and for setting the time at which the supply of the reaction liquid is stopped; and the reaction is performed by feeding the reaction liquid into the liquid-reactive chemical at the time set by the timer. The gas generated by this reaction is discharged to the outside (into a sealed treatment chamber) from the chemical-receiving chamber via a gas discharge opening.

In addition, and as a result of the supply initiation time and supply stopping time of the reaction liquid having been set, the appropriate amount of liquid that is required for the reaction of the liquid-reactive chemical is supplied; and the reaction gas is generated after a personnel-free sealed state has been formed in the treatment chamber, so as to eliminate chemical loss.

The reaction liquid supply port is situated in a partition wall that divides the tubular body into the liquid-receiving chamber and chemical-receiving chamber.

Alternatively, the system is devised so that the upper tubular part and lower tubular part of the tubular body can be separated, the partition wall that divides [the tubular body] into the liquid-receiving chamber and chemical-receiving chamber is situated on the lower end of the upper tubular part, and the upper end of the lower tubular part is opened by separating the upper tubular part, so that the liquid-reactive chemical can be supplied via this open part to the chemical-receiving chamber formed by the lower tubular part.

Preferably, the reaction liquid supply port is formed in a position that is eccentric with respect to the center of the partition wall, so that the reaction liquid will be introduced in a position that is eccentric with respect to the center of the liquid-reactive chemical, thus promoting uniform mixing of the reaction liquid and chemical.

Furthermore, means for supplying an agitating gas to the chemical-receiving chamber can be provided, and the reaction of the liquid-reactive chemical can be activated. In this case, the timer means functions as means for setting the reaction liquid supply time, while also functioning as means for setting the agitating gas supply time.

The agitating gas supply means has a structure whereby the gas is discharged after passing through an agitating-gas-discharge material consisting of a porous mineral substance. The gas passes through the high-density pores of this agitating-gas-discharge material, thus promoting the generation of fine gas bubbles, and heightening the agitating effect.

In the present invention, the reaction can be initiated by mixing the reaction liquid and liquid-reactive chemical at a specified time, and the supply of the reaction liquid can be stopped at a specified time. Accordingly, a desirable configuration of use can be adopted in which the generation of gas by the liquid-reactive chemical can be promoted after workers have finished loading fruits, vegetables, or other produce into the treatment chamber, and a personnel-free sealed state has been formed in the treatment chamber.

In addition, the appropriate amount of liquid required for the reaction can be supplied to the liquid-reactive chemical, and the reaction can be initiated at a set time. Accordingly, the problem of chemical loss encountered in the conventional embodiment can be eliminated.

### [Working Examples]

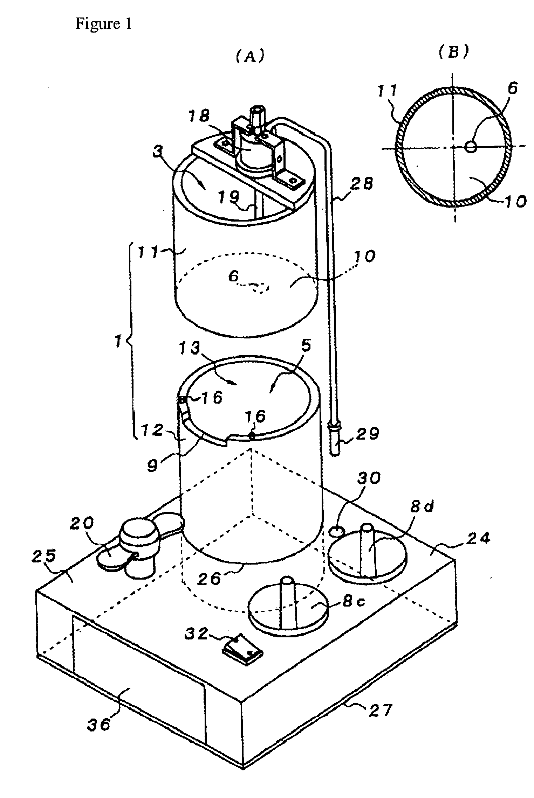

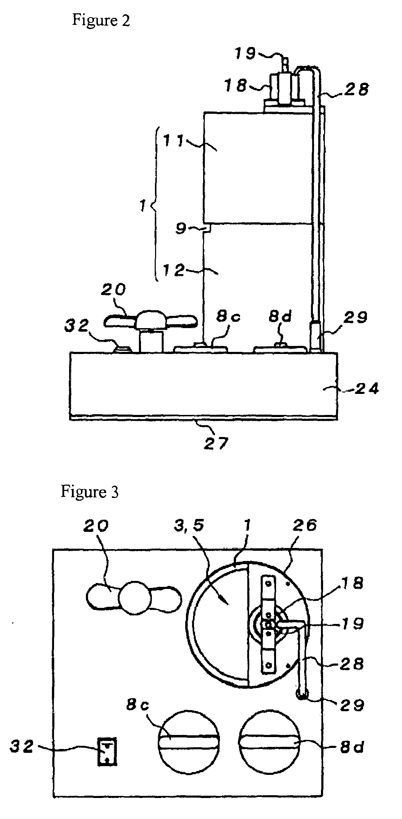

The best mode for carrying out the present invention shall be described below with reference to Figures 1 through 6.
The gas generating device of the present invention has a structure whereby a liquid-receiving chamber 3 that receives a reaction liquid 2 is formed by an upper tubular part 11 of an upright tubular body 1, and a chemical-receiving chamber 5 which receives a liquid-reactive chemical 4 that generates a gas by reacting with the reaction liquid 2 is formed by a lower tubular part 12 of the tubular body 1. Thus, the reaction liquid 2 and liquid-reactive chemical 4 are separately loaded inside the upper and lower chambers 3 and 5.

For example, the liquid-reactive chemical 4 is a cyclopropene compound that generates a freshness-preserving gas on reacting with water. Alternative examples of the chemical 4 include peroxidized coal that generates oxygen on reacting with water, manganese dioxide that generates oxygen on reacting with aqueous hydrogen peroxide, and aluminum that generates hydrogen on reacting with an aqueous solution of sodium hydroxide.

The tubular body 1 is a cylindrical or square tubular body, and the tubular body 1 is formed overall as a tubular body with a uniform diameter, and divided into two parts, i.e., an upper tubular part 11 that forms the liquid-receiving chamber 3, and a lower tubular part 12 that forms the chemical-receiving chamber 5.

Alternatively, the upper tubular part 11 that forms the liquid-receiving chamber 3 and the lower tubular part 12 that forms the chemical-receiving chamber 5 may be formed with different diameters, i.e., one with a larger diameter, and the other with a smaller diameter.

A reaction liquid supply port 6 that supplies the reaction liquid 2 that is inside the liquid-receiving chamber 3 to the chemical-receiving chamber 5 is provided between the liquid-receiving chamber 3 and chemical-receiving chamber 5.

As a specific example, a partition wall 10 that divides the tubular body 1 into an upper tubular part 11 and lower tubular part 12 is provided to an intermediate part of the tubular body 1, the tubular body 1 is divided into the liquid-receiving chamber 3 and chemical-receiving chamber 5 by this partition wall 10, and the reaction liquid supply port 6 is provided in this partition wall 10.

Preferably, as is shown in Figure 1B, the reaction liquid supply port 6 is provided in a position that is eccentric with respect to the center of the partition wall 10, thus causing the reaction liquid 2 to drip in a position that is eccentric with respect to the center of the chemical-receiving chamber 5 (liquid-reactive chemical 4) via the supply port 6.

As a result of the reaction liquid 2 being caused to drip in a position that is eccentric with respect to the center of the liquid-reactive chemical 4, turbulence is generated in this chemical 4, so as to promote uniform agitation and mixing with the reaction liquid 2.

In the tubular body 1, the upper tubular part 11 forming the liquid-receiving chamber 3, and the lower tubular part 12 forming the chemical-receiving chamber 5 that receives the liquid-reactive chemical 4, are designed as mutually separate bodies; and (for example) the lower end of the upper tubular part 11 and upper end of the lower tubular part 12 are connected via a hinge, so that the upper tubular part 11 can be separated from the lower tubular part 12 via this hinge.

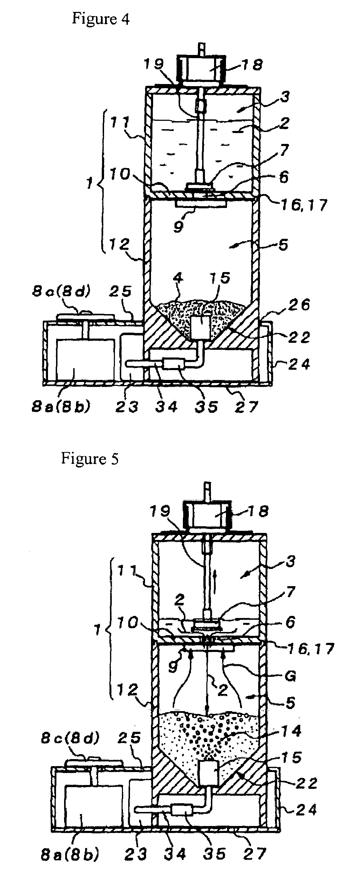

Alternatively, as is shown in Figures 1 and 4, the upper tubular part 11 and lower tubular part 12 are formed as separate bodies, a protuberance 16 is formed on either the lower end surface of the upper tubular part 11 or the upper end surface of the lower tubular part 12, a hole for the protuberance 17 is formed in the other of these two end surfaces, and the two parts 11 and 12 are connected in fixed positions by engaging the protuberance 16 with the hole for the protuberance 17. The upper tubular part 11 can, thereby, be separated from the lower tubular part 11 on being disengaged therefrom.

The partition wall 10 that divides the tubular body 1 into the liquid-receiving chamber 3 and chemical-receiving chamber 5 is situated on the lower end of the upper tubular part 11, and the system is designed so that the upper end tubular opening 13 of the lower tubular part 12 is opened by separating the upper tubular part 11 from the lower tubular part 12, thus making it possible to introduce the liquid-reactive chemical 4 into the chemical-receiving chamber 5 formed by the lower tubular part 12, via the open upper end tubular opening 13.

A shut-off valve 7 that opens and closes the reaction liquid supply port 6 is provided. This shut-off valve 7 opens the reaction liquid supply port 6 so that the reaction liquid 2 will be supplied by being dripped downward into the chemical-receiving chamber 5; this valve 7 furthermore cuts off the supply of the reaction liquid 2 by closing the reaction liquid supply port 6.

In a specific example, as is shown in Figures 1, 2, and 4, a driving mechanism for the shut-off valve, e.g., a solenoid 18, is mounted on the upper end of the tubular body 1, i.e., the upper end of the upper tubular part 11. The plunger 19 of this solenoid 18 is extended through the upper tubular part 11 in parallel to the axial core thereof, and the shut-off valve 7 is attached to the tip end of this plunger 19. As is shown in Figure 4, the shut-off valve 7 is lowered onto and pressed against the surface of the partition wall 10 in the circumferential edge region of the reaction liquid supply port 6 by the extension of the plunger 19, thus closing this supply port 6. As a result of this closing, a state is maintained in which the reaction liquid 2 is loaded inside the liquid-receiving chamber 3, and the liquid-reactive chemical 4 is loaded inside the chemical-receiving chamber 5.

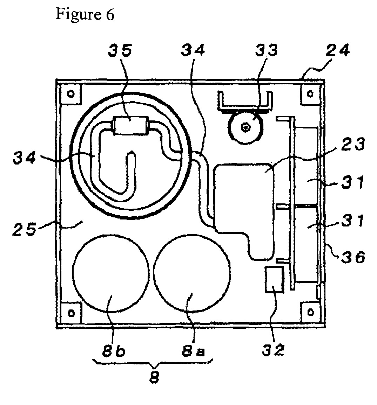

Furthermore, as is shown in Figure 5, the supply port 6 is opened by raising the shut-off valve 7 by the retraction of the plunger 19. As a result of this opening, the reaction liquid 2 inside the liquid-receiving chamber 3 passes through the supply port 6, is supplied by being dripped downward into the chemical-receiving chamber 5, and mixes with the liquid-reactive chemical 4.

In a case where the reaction liquid supply port 6 is provided in an eccentric position in the partition wall 10, the solenoid 18, plunger 19, and shut-off valve 7 are provided in eccentric positions of the upper tubular part 11, making these parts correspond to the supply port 6.

The tubular body 1 is installed in an upright position on a box-shaped stand 24. By way of description in further detail, an insertion hole 26 for the tubular body 1 is provided in the ceiling plate 25 of the box-shaped stand 24, and the lower end of the tubular body 1, i.e., the lower end of the lower tubular part 12, is inserted with an essentially tight fit into this insertion hole 26, so that the lower end surface of the lower tubular part 12 is supported by the inside surface of the bottom plate 27 of the box-shaped stand 24.

A power supply cable 28 is extended from the solenoid 18, and a plug 29 situated on the end of this cable is connected to a socket 30 attached to the box-shaped stand 24, so that power is supplied to the solenoid 18. Furthermore, when the upper tubular part 11 is separated from the lower tubular part 12, the connection is interrupted. As is shown in Figure 6, a battery 31 constituting a power supply is accommodated inside the box-shaped stand 24, and the socket 30 is connected to this battery 31. Furthermore, a power supply switch 32 is situated on the box-shaped stand 24, and is used to switch the battery 31 ON/OFF.

A timer 8 is provided as means for setting the reaction liquid supply time via the opening and closing of the shut-off valve 7. This timer 8 sets the ON/OFF time of the solenoid 18, i.e., the shut off time of the shut-off valve 7. The reaction liquid supply port 6 is opened by the shut-off valve 7 at the time set by the timer 8, so that the supply of the reaction liquid 2 into the chemical-receiving chamber 5 (i.e., into the liquid-reactive chemical 4) by dripping is initiated, thus promoting the reaction of this chemical 4.

Furthermore, the shut-off valve 7 is shut off by the solenoid 18 at a time set by the timer 8, so that the reaction liquid supply port 6 will be closed, thus stopping the supply of the reaction liquid 2.

The timer 8 consists of a first timer 8a and a second timer 8b. The first timer 8a has the function of setting the opening initiation time of the shut-off valve 7, i.e., the supply initiation time of the reaction liquid 2 (reaction initiation time), while the second timer 8b has the function of setting the closing time of the shut-off valve 7, i.e., the reaction liquid 2 supply stopping time.

The present invention also provides for circumstances in which a single timer that has the functions of both timers 8a and 8b is used instead of using the two timers 8a and 8b.

The timers 8a and 8b use a known dial/rotary-type timer mechanism. As is shown in Figure 6, both timers 8a and 8b are situated inside the box-shaped stand 24, and rotary operating dials 8c and 8d installed on the axial ends of the timer mechanisms 8a and 8b are situated on the upper surface of the ceiling plate 25. Furthermore, Figure 6 shows only the cases of the timer mechanisms 8a and 8b; the internal mechanisms have been omitted.

A gas G generated by the reaction is discharged to the outside (into a sealed treatment chamber) from the chemical-receiving chamber 5 via a gas discharge opening 9. For example, a slot is formed in the tube wall at the upper end of the lower tubular part 12 as this gas discharge opening 9.

A gas diffusion fan 20 is situated beneath the opening 9 as a means for promoting the diffusion of the gas that is discharged from the gas discharge opening 9. This fan 20 is situated on the ceiling plate 25 of the box-shaped stand 24 directly beneath the gas discharge opening 9, and a motor 33 that drives this fan 20 is situated inside the box-shaped stand 24.

The gas G generated inside the chemical-receiving chamber 5 is discharged from the opening 9 and diffused by the gas diffusion fan 20, so as to come into contact with fruits or other produce inside the sealed treatment chamber.

Further provided is means for supplying an agitating gas 14 to the chemical-receiving chamber 5, to facilitate the reaction of the liquid-reactive chemical 4.

The timer means 8a and 8b function as means for setting the reaction liquid supply time, while also simultaneously function as means for setting the agitating gas supply time, so that the reaction liquid supply time and agitating gas supply time are set as the same time. Specifically, the opening operation of the shut-off valve 7 and the supply operation of the diffusion gas are started at the same time.

In a specific example, a material 15 for generating the agitating gas 14 is situated on the lower end of the lower tubular part 12, i.e., the lower end of the chemical-receiving chamber 5, and an agitating gas such as air, nitrogen, carbon dioxide or the like is introduced into a suspension of the liquid-reactive chemical 4 and reaction liquid 2 via the generating material 15, with supply of gas to the liquid-reactive chemical 4 being activated.

An agitating-gas-generating material 15 comprising a porous mineral substance is situated on the agitating gas discharge end of the agitating gas supply means, so that the generation of fine gas bubbles is promoted via the gaps in this agitating-gas-generating material 15, thus heightening the agitating effect that the gas bubbles provide.

For example, the bottom part of the chemical-receiving chamber 5 is formed as an inverted-conical chamber 22, and the agitating-gas-generating material 15 is installed in the lower-end converging part of this inverted-conical chamber 22. The agitating gas 14 is supplied to this agitating-gas-generating material 15 under pressure by means of a pump 23, and the agitating gas 14 is caused to flow uniformly through the chemical-receiving chamber 5 via the inverted-conical chamber 22.

Instead of being provided in the bottom part of the chemical-receiving chamber 5, it is also possible to install the agitating-gas-generating material 15 at an intermediate point of the agitating gas flow path between the pump 23 and the bottom part of the chemical-receiving chamber 5.

The pump 23 is accommodated inside the box-shaped stand 24, and the pump 23 and the agitating-gas-generating material 15 are connected by a tube 34 interposed therebetween by a check valve 35.

The bottom plate 27 of the box-shaped stand 24 can open and close, and the battery 31, timer mechanisms 8a and 8b, pump 23, and motor 33 are situated on this bottom plate 27; these elements can be exposed by removing the bottom plate 27.

The battery 31 supplies power to the timer mechanisms 8a and 8b, agitating gas supply pump 23, and drive motor 33 of the fan 20, and also supplies power to the actuating mechanism of the shut-off valve 7. The symbol 36 indicates a battery replacement cover situated on a side plate of the box-shaped stand 24.

### BRIEF DESCRIPTION OF THE DRAWINGS

Figure 1A is a perspective view showing the gas generating device of the present invention with an exploded view of the upper tubular part, and Figure 1B is a sectional view showing the opening position of the reaction liquid supply port in this gas generating device in a top view.
Figure 2 is a side view of the gas generating device.
Figure 3 is a top view of the gas generating device.
Figure 4 is a sectional view of the gas generating device, showing the state prior to the supply of the reaction liquid.
Figure 5 is a sectional view of the gas generating device, showing the state during the supply of the reaction liquid.
Figure 6 is a top view showing the internal structure of the box-shaped stand constituting the gas generating device.

### KEY TO SYMBOLS

1: Tubular body
2: Reaction liquid
3: Liquid-receiving chamber
4: Liquid-reactive chemical
5: Chemical-receiving chamber
6: Reaction liquid supply port
7: Shut-off valve
8a, 8b: Timers
8c, 8c: Rotary operating dials
9: Gas discharge opening
10: Partition wall
11: Upper tubular part
12: Lower tubular part
13: Upper end tubular opening of lower tubular part
14: Agitating gas
15: Agitating-gas-generating material
16: Protuberance
17: Hole for protuberance
18: Solenoid
19: Plunger
20: Gas diffusion fan
22: Inverted-conical chamber
23: Pump
24: Box-shaped stand
25: Ceiling plate
26: Insertion hole
27: Bottom plate
28: Power supply cable
29: Plug
30: Socket
31: Battery
32: Power supply switch
33: Motor
34: Tube
35: Back flow check valve
36: Battery replacement cover
G: Gas generated from liquid-reactive chemical

## Claims

1. A gas generating device, **characterized in that** a liquid-receiving chamber receiving a reaction liquid is formed by an upper tubular part of a tubular body; a chemical-receiving chamber receiving a liquid-reactive chemical that reacts with a liquid and generates a gas is formed by a lower tubular part of the same tubular body; a reaction liquid supply port that supplies the reaction liquid in the liquid-receiving chamber to the chemical-receiving chamber is provided between the liquid-receiving chamber and chemical-receiving chamber; a shut-off valve is provided which opens the reaction liquid supply port and allows the supply of the reaction liquid, and which closes the reaction liquid supply port and cuts off the supply of the reaction liquid; and a gas discharge opening is provided which discharges the gas generated in the chemical-receiving chamber to the outside from the receiving chamber, with the gas generating device further comprising timer means for setting the reaction liquid supply time via the opening and closing of the shut-off valve.

2. The gas generating device according to Claim 1, **characterized in that** a partition wall is situated in an intermediate part of the tubular body, so that the tubular body is partitioned into the liquid-receiving chamber and chemical-receiving chamber, and the reaction liquid supply port is formed in the partition wall.

3. The gas generating device according to Claim 1, **characterized in that** the upper tubular part and lower tubular part are formed as separable separate bodies, a partition wall, which partitions the tubular body into a liquid-receiving chamber and a chemical-receiving chamber, is provided to a lower end of the upper tubular part, the reaction liquid supply port is provided in the partition wall, the upper end of the lower tubular part is opened by the separation of the upper tubular part, and the liquid-reactive chemical is supplied via the opening part to the chemical-receiving chamber formed by the lower tubular part.

4. The gas generating device according to Claim 2 or 3, **characterized in that** the reaction liquid supply port is provided in a position that is eccentric with respect to the center of the partition wall.

5. The gas generating device according to Claim 1, **characterized in that** it comprises means for supplying an agitating gas to the chemical-receiving chamber, with a timer means being means for setting the reaction liquid supply time, and also being means for setting the agitating gas supply time.

6. The gas generating device according to Claim 5, **characterized in that** the agitating gas supply means has a structure that emits the gas via an agitating-gas-generating material comprising a porous mineral substance.
